# EUROPEAN PATENT SPECIFICATION

(11) **EP 2 030 939 B1**
(45) Date of publication and mention of the grant of the patent: **20.03.2013**
(21) Application number: 07115375.3
(22) Date of filing: 31.08.2007
(51) Int. Cl.: B66F 9/075, B60G 3/01, B62B 3/06, F16C 27/06

(54) **Industrial truck**
Flurförderzeug
Véhicule industriel

(43) Date of publication of application: 04.03.2009
(73) Proprietor: BT Products AB, 595 81 Mjölby (SE)
(72) Inventor: Franzén, Oskar, 595 51 Mjölby (SE)
(74) Representative: Börlin, Maria

(56) References cited:
- EP-A- 0 658 510
- EP-A- 1 782 975
- DE-C1- 19 634 895
- FR-A- 2 582 997
- GB-A- 786 463
- US-A- 3 936 101

## Description

### TECHNICAL FIELD

The present invention relates to a sliding suspension unit for a wheel of an industrial truck, an industrial truck comprising such sliding suspension unit, and a sliding bearing for an industrial truck.

### BACKGROUND ART

In industrial trucks of the tiller type, a plurality of wheels are arranged under a truck body. One of the wheels is a driving and steering wheel, by means of which the truck is controlled, i.e. accelerated, decelerated and steered sideways. The driving and steering wheel is resiliently biased towards the ground which gives a predetermined contact force between said wheel and the ground.

EP0658510 B1 discloses an industrial truck. A drive wheel is under pressure kept in engagement with the floor. Roller bearings are utilized in order to decrease frictional resistance on vertical movement of the drive wheel. This solution is disadvantageous in that it is complex and expensive in manufacture. Further, readjustments are needed after assembly.

FR-A-2582997 discloses a device adaptable to any self-propelled or drawn vehicle or appliance comprising, for each wheel R, a movable slide to which is fixed the stub axle or hub. The slide comprises two cylindrical tubes mounted in parallel and of equal length. The slide is sliding vertically through ball bearings around two parallel cylindrical bars of equal length, whose ends are fixed to the four ends of a rigid cradle itself fixed to the chassis of the vehicle or craft. This device has the disadvantage that the slide is unable to slide along the bars without additional resistance if the slide is axially misaligned with respect to the tubes.

EP-A-1782975 discloses a guiding element having a slide bearing which is formed by ring sector shaped sliding elements positioned in the guiding element while the sliding elements encase the guideway unit in a ring shape. One sliding element or several sliding elements are arranged one above the other as viewed in the direction of the longitudinal axis of the guideway unit or the guiding element. The sliding bearing is designed for a specific wheel suspension having curved, non-vertical, rods.

The object of the present invention is to provide a sliding suspension unit for an industrial truck, which overcomes the disadvantages of prior art.

### SUMMARY OF THE INVENTION

The present invention relates to a sliding suspension unit for a wheel of an industrial truck. The unit comprises a substantially vertical rod, a rod support which is arranged at the truck for supporting said rod, and a wheel support which is carried by said rod for supporting said wheel. Herein, either the rod support or the wheel support is stationary fixed to the rod, whereas the other support is slidingly connected to the rod. The support which is slidingly connected to the rod comprises a flexible bushing element, wherein, by means of deformation of said flexible bushing element, the slidingly connected support can slide along the rod without substantial additional resistance even if said support is axially misaligned with respect to the rod.

By means of said flexible bushing element, the present invention entails lower demands on manufacturing tolerances. Further, no adjustments after assembly are needed.

The wheel can be a driving and steering wheel of the industrial truck. Also, the wheel can constitute a part of a driving and steering unit of the industrial truck.

In order to achieve low friction and an uncomplicated design, the support that is slidingly connected to the rod comprises a sliding bearing bushing, which is arranged around the rod. In this connection, the flexible bushing element is arranged radially outside the sliding bearing bushing. Further, the flexible bushing element can be essentially cylindrical, whereby transverse forces are equally transmitted independent of their direction, as will be described in more detail below.

A rigid sleeve is be arranged radially between the sliding bearing bushing and the flexible bushing element. Such a sleeve supports the sliding bearing bushing, since the latter can be made of composite material and if so is not apt to carry a larger mechanical load.

A bearing housing is provided to contain the flexible bushing element, the sleeve and the sliding bearing bushing, said housing can further comprise two retaining elements, being arranged to restrict axial movement of the sleeve and the sliding bearing bushing.

In order to prevent moisture and impurities from entering the rod supports, sealings can be provided around the suspension rod. The retaining elements can comprise means for holding the sealings.

The support which is stationary fixed to the rod can, for ease of manufacture, be press fit to the rod.

The suspension unit can comprise one or more suspension rods. The number and arrangement of the rods must be considered in accordance with the prevailing circumstances on designing the sliding suspension unit. Here, factors such as required load capacity, rigidity and weight influence the choice of design. Certainly, aspects of available space and costs must also be considered.

### BRIEF DESCRIPTION OF THE DRAWINGS

The invention will hereinafter be described with reference to an embodiment of the invention and the enclosed figures, where
- Figure 1: shows an industrial truck in which the suspension unit according to the invention can be put to use;
- Figure 2: shows a cut-out of the rear section of the industrial truck of figure 1
- Figure 3: is a view of a driving and steering unit, a tiller arm, and a sliding suspension unit;
- Figure 4: is a perspective view of a sliding suspension unit comprising a driving and steering unit bracket, two suspension rods, as well as upper and lower suspension rod supports;
- Figure 5: is a rear view of the unit of figure 4;
- Figure 6: is a side view of the unit of figure 4;
- Figure 7: shows the cross section A-A of figure 5;
- Figure 8: is an enlarged cross section of the upper suspension rod support; and
- Figure 9: is an enlarged cross section of the lower suspension rod support.

### DETAILED DESCRIPTION

The sliding suspension unit, the industrial truck, and the sliding bearing of the present invention will now be described by way of example only. The disclosure is not intended to limit the scope of the enclosed claims in any way.

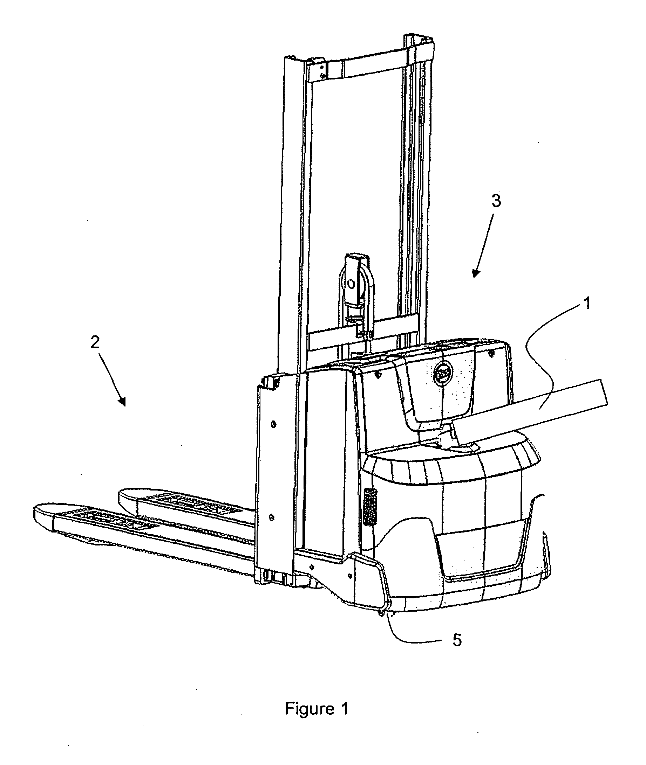

The sliding suspension unit of the present invention can be used in an industrial truck of the kind shown in figure 1. This industrial truck is a so called tiller truck, where the operator walks beside the truck and controls the truck by means of a tiller arm 1 (schematically shown). However, the truck can also be furnished with a platform (not shown) on which an operator can stand and drive the truck. Two lift forks 2 project from the truck body 3. Theses forks 2 engage the load, normally a pallet, which is to be handled.

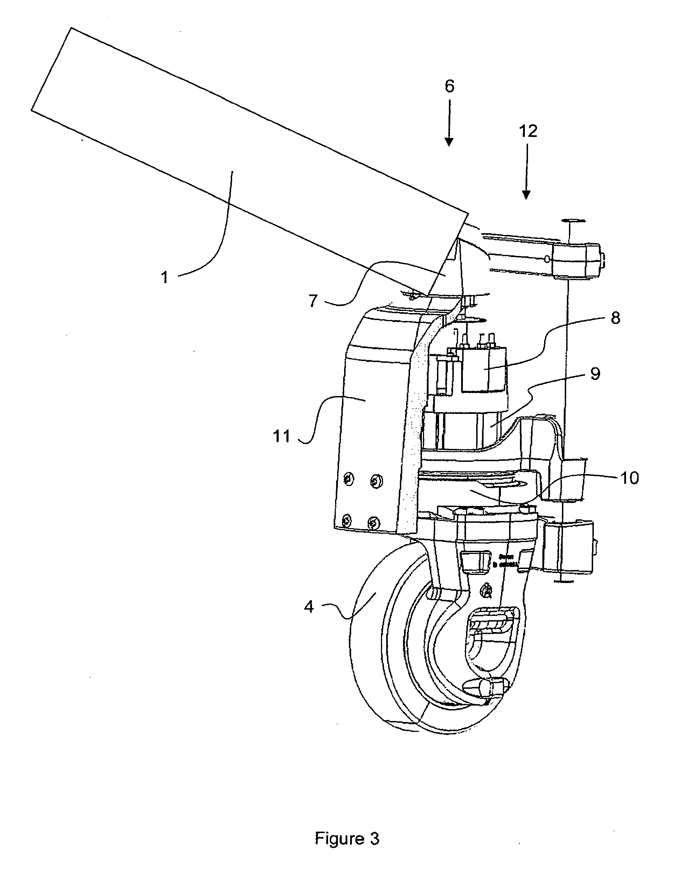

Three wheels 4, 5 are arranged under the truck body 3; one driving and steering wheel 4 (see figure 3), and two side wheels 5 (only one side wheel is shown in figure 1). The side wheels 5 are mounted on and rotatable around a vertical axis. The side wheels 5 are fixed in the vertical direction and arranged essentially symmetrically on both sides of the driving and steering wheel 4. Normally the two side wheels 5 carry the same load. The driving and steering wheel is resiliently biased towards the ground, on which the truck operates, by resilient means which are not described in detail in the present application. Thus, some of the truck body load is also carried by the driving and steering wheel 4. This arrangement of the side wheels 5 and the driving and steering wheel 4 enables the industrial truck to be controlled, i.e. accelerated, decelerated and steered sideways, by the driving and steering wheel 4 alone, while the side wheels 5 carry a part of the load and stabilize the truck.

The resilient suspension of the driving and steering wheel 4 provides a predetermined contact force between said wheel and the ground. Further, by way of the resilient suspension, the driving and steering wheel 4 can compensate for ground unevenness, without forwarding mechanical impacts to the truck body.

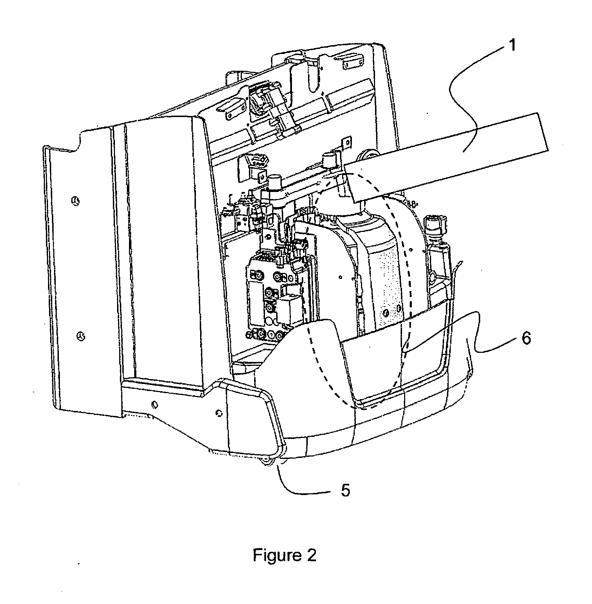

Figure 2 shows a partial cut-out of the industrial truck body 3. The tiller arm 1 is attached to a driving and steering unit 6, which is shown in detail in figure 3. The driving and steering unit 6 comprises a tiller arm mounting 7, a brake 8, a motor 9, a bearing, a transmission 10, and the driving and steering wheel 4. The bearing can be located between the motor 9 and the transmission 10, the bearing is however not indicated in figure 3.

In use, the industrial truck is steered sideways by means of the tiller arm 1. Rotation of said arm causes rotation of the tiller arm mounting 7, which is stationary connected to the wheel 4 through a sweeping member 11. Said sweeping member 11 has a curved cross section and is arched in its upper region so as to closely sweep around the motor 9 and transfer steering force from the tiller arm mounting 7 to the wheel 4.

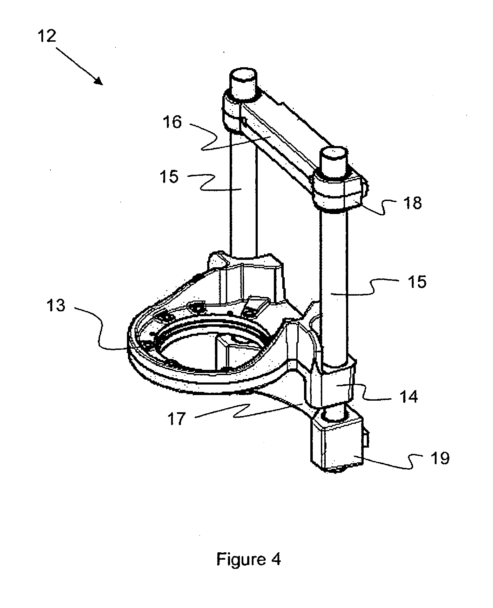

Figure 3 indicates a sliding suspension unit 12 for the driving and steering unit 6. The sliding suspension unit 12 will be further elucidated below with reference to figures 4 to 6. In the present case, the motor 9 in stationary with respect to the suspension unit 12. Thus, on sideways steering, the motor 9 does not rotate with the driving and steering unit 6. However, in alternative embodiments, the motor can be arranged to rotate concurrent with the driving and steering unit 6.

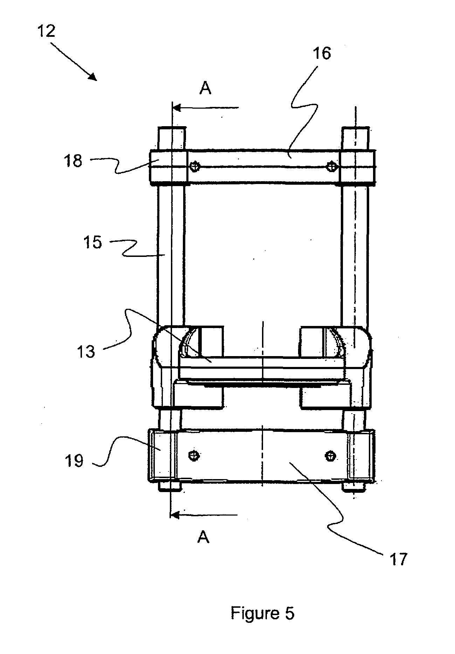

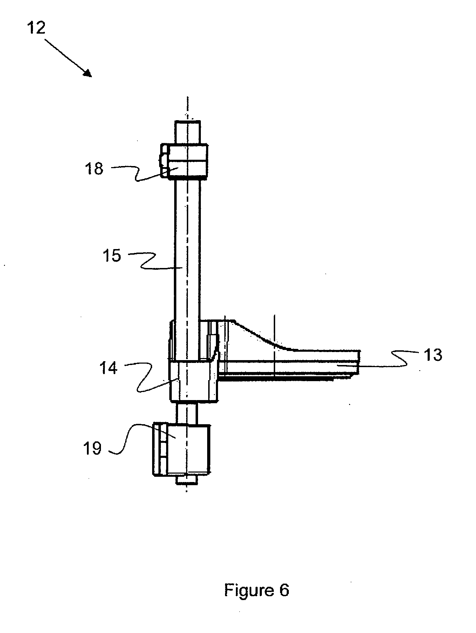

Figure 4 is a perspective view of the sliding suspension unit 12, figures 5 and 6 show the unit 12 in rear and side view, respectively. The sliding suspension unit 12 comprises a driving and steering unit bracket 13, two bracket supports 14, two suspension rods 15, as well as upper and lower suspension rod supports 16, 17. In the industrial truck, the driving and steering unit bracket 13 with the bracket supports 14 act as a wheel support 13, 14. The driving and steering unit bracket 13 is axially movable attached to the truck body 3 and carries the driving and steering unit 6. The driving and steering unit 6 can be attached to the bracket 13 by bolting. In a first embodiment, the bracket supports 14, which can be formed in one piece with the bracket 13, are fixed to the suspension rods 15, e.g. by press fitting. The upper and lower suspension rod supports 16, 17 are firmly attached to the truck body 3, e.g. by means of bolting. The suspension rods 15 can slide axially through the upper and lower suspension rod supports 16, 17. Sliding bearings are provided in order to facilitate this sliding. For means of simplicity, these bearings will now be described with reference to one of the two suspension rods only. The upper rod support 16 comprises an upper sliding bearing 18, and the lower rod support 17 comprises a lower sliding bearing 19. In accordance with a second embodiment, on the contrary, the suspension rods 15 are fixed to the upper and lower suspension rod supports 16, 17, whereas the bracket supports 14 can slide axially on the suspension rods 15.

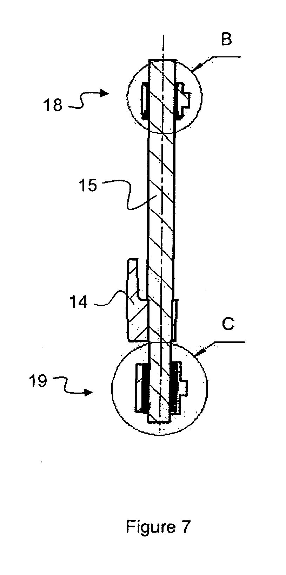

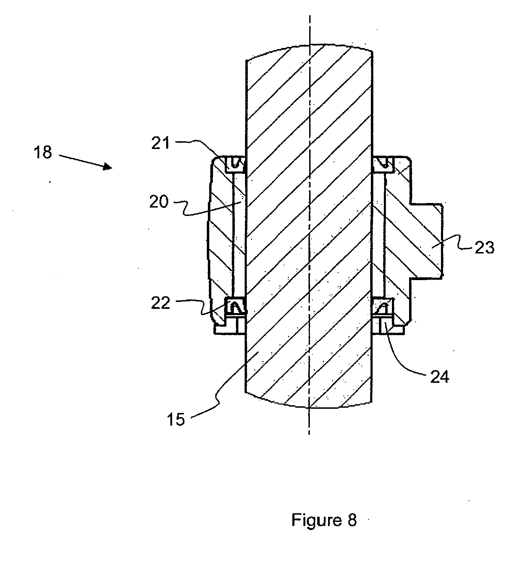

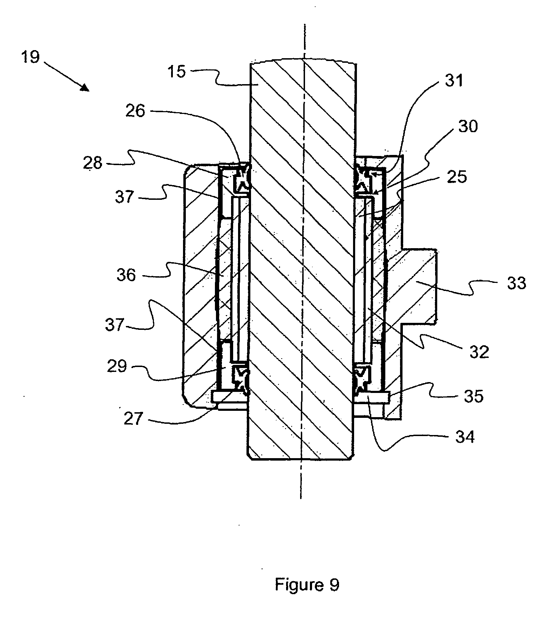

Figure 7 shows a cross section A-A (figure 5) of suspension rod 15, bracket support 14, upper sliding bearing 18 and lower sliding bearing 19 in accordance with the first embodiment. Detailed views of the encircled areas B and C are shown in figures 8 and 9, respectively. In the second embodiment, the bracket support 14 has a design corresponding to figure 9, whereas the suspension rod 15 is fixed to the upper and lower suspension rod supports 16, 17. Thus, the description of the sliding bearing 19 in accordance with the first embodiment also applies to the second embodiment. As can be seen in figure 8, the innermost element of the upper sliding bearing 18 is an upper sliding bearing bushing 20, which is arranged around the suspension rod 15. An oil film can be present between the upper sliding bearing bushing 20 and the suspension rod 15. If present, such oil film facilitates the sliding of the rod 15 through the bearing 18. Upper and lower sealings 21, 22 can be provided in order to hinder moisture and/or impurities from entering the upper sliding bearing 18. The sealings 21, 22 are arranged axially above and below the upper sliding bearing bushing 20, respectively. An upper sliding bearing housing 23 is arranged around the bushing 20 and the sealings 21, 22, and thereby constitutes an outer wall for said elements 20, 21, 22. The upper sliding bearing housing 23 can be a part of the upper rod support 16, or be a separate element that is firmly attached to the upper rod support 16. The sealings 21, 22 comprise a ring element (not shown) which is press fit in the upper sliding bearing housing 23, thus limiting axial movement of the sealings 21, 22 and the bearing housing 23. Further, the upper sliding bearing 18 can be furnished with a lower protecting element 24. Said element 24 can be press fit in the housing 23, and protects the sealings 22 from mechanical damage from a resilient element (not shown), which can be arranged around rod 15 below the upper sliding bearing 18. The purpose of such a resilient element, e.g. a coil spring, would be to bias the driving and steering unit bracket 13, and thus the driving and steering unit 6, towards the ground.

Turning to figure 9, a detailed view of the area of the lower sliding bearing 19 can be seen. In accordance with the above described upper sliding bearing 18, the lower sliding bearing 19 comprises a lower sliding bearing bushing 25. Further, upper and lower sealings 26, 27 are arranged adjacent the lower sliding bearing bushing 25. In this case, the sealings 26, 27 are not held in place by an internal ring element, instead, the sealings and the lower sliding bearing bushing 25 are held by two retaining elements 28, 29. According to the present embodiment of the invention, the two elements 28, 29 are of identical shape, only differing 180° in orientation on assembly. The retaining elements 28, 29 comprise a cylindrical mantle and two flanges 30, 31 which project in the radial direction. Hereby, a central flange 30 projects inward from the axial centre of the retaining element mantle, and an end flange 31 projects inward from an axial end of the retaining element mantle. The sealings 26, 27 are axially supported between said flanges 30, 31.

As can be seen in figure 9, a sleeve 32, which can consist of a metal tube, is arranged outside the lower sliding bearing bushing 25. The sleeve 32 and the bushing 25 butt against the central flange 30 of the retaining element 28, 29. More precisely, the sleeve 32 and the bushing 25 lie against the opposite side of the flange 30, compared to the sealings 26, 27. Due to the shape of the sealings and the thicknesses of the bushing and the sleeve, the central flange 30 projects further towards the suspension rod 15 than does the end flange 31.

A lower sliding bearing housing 33 encloses the retaining elements 28, 29. The lower sliding bearing housing 33 can be a part of the lower rod support 17, or be a separate element that is firmly attached said support 17. The upper end of the housing 33 extends inwards, towards the suspension rod 15, thereby hindering axial movement in the upwards direction of retaining element 28 in figure 9. Thus, the upper end of the mantle of the upper retaining element 28 and the upper end face of flange 31 bear against an inner surface of the lower sliding bearing housing 33. The lower retaining element 29, i.e. the lower end of the mantle of said element 29 and the lower end face of flange 31, butt against a lock ring 34. The lock ring is mounted in an inner groove 35 in the lower sliding bearing housing 33.

Alternatively, in order to axially fix the lower sliding bearing bushing 25 with respect to the lower sliding bearing housing 33, lock rings can be used on both sides of the retaining elements 28, 29.

A flexible bushing element 36 is arranged between the sleeve 32 and the lower sliding bearing housing 33. In the embodiment of figure 9, the flexible bushing element 36 has the form of a tube. The flexible bushing element 36 can consist of PUR-rubber. The lower end of the upper retaining element 28 and the upper end of the lower retaining element 29 confine the flexible bushing element 36 axially. The distance between the outer surface of the sleeve 32 and the inner wall of the lower sliding bearing housing 33 is less than the thickness of the bushing element 36. Thus, when assembled, the flexible bushing element 36 is compressed between the sleeve 32 and the bearing housing 33.

Circumferential gaps 37 are formed above and below the flexible bushing element 36. Said gaps radially extend from the outer surface of the retaining elements 28, 29 to the inner wall of the lower sliding bearing housing 33.

By means of the lower sliding bearing 19 in accordance with the invention, a certain movement of the suspension rod 15 with respect to the lower sliding bearing housing 33 or the lower rod support 17 is allowed for. Put in other words, the central longitudinal axis of the suspension rod 15 need not be exactly aligned with the central longitudinal axis of the lower sliding bearing bushing 25. Such movement or misalignment is accounted for by the flexible bushing element 36. If the rod 15, and consequently also the sliding bearing bushing 25 and the sleeve 32, is misaligned with respect to the lower sliding bearing housing 33, the flexible bushing element 36 is deformed. The maximum allowable magnitude of such misalignment is limited by the width of the gaps 37. On excessive misalignment, the upper retaining element 28 and/or the lower retaining element 29 reach the inner surface of the lower bearing housing 33.

As already said, the lower suspension rod support 17 is equipped with two lower sliding bearings 19. In this connection, it is to be appreciated that, by means of the present design of the lower sliding bearings 19, the two suspension rods 15 need not be precisely parallel. The elastic compliance of the lower sliding bearings 19 increases the permissible variation on manufacture of the sliding suspension unit 12. Thus, when the present lower sliding bearings 19 are used in the sliding suspension unit 12, no readjustment of misaligned suspension rods 15 is needed when the driving and steering unit 6 is installed in the truck. By the invention, the risk for the occurrence of the so called drawer effect is decreased. Another advantage of the present invention is that transverse forces and/or bending moments, introduced by the driving and steering wheel 4 due to ground unevenness or acceleration /deceleration, will not cause an increased friction between the driving and steering unit 6 and the truck body 3. By means of the compressed flexible bushing elements, the tiller arm 1 is tightly connected to the truck body 3, without inconvenient play. A cylindrically shaped flexible bushing element 36 will be symmetrically compressed, i.e. the flexible element will be equally compressed in all transversal directions. Thus, transverse forces and bending moments will, irrespective of their directions in the transversal plane, be equally accounted for by the flexible bushing element.

The sliding bearings of the present invention can also be used where one, three or more suspension rods are employed. The present flexible bushing element will ensure smooth sliding, i.e. low frictional resistance, of the suspension rod/rods even in the case of transverse forces and/or misalignment of the rod/rods and the bearing/bearings. A suspension rod can be held by two axially separated rod supports 16, 17, or by one rod support 17 alone. Further, it is conceivable that the suspension rods can be stationery fixed to a rod support, whereas the bracket supports slide along the suspension rods. The rods, and likewise all elements arranged around and connected to them, need not, as in the present embodiment, be of cylindrical cross section; also, e.g. square or rectangular cross sections are conceivable.

## Claims

1. Sliding suspension unit (12) for a wheel (4) of an industrial truck, which unit (12) comprises
a substantially vertical rod (15),
a rod support (16, 17) arranged at the truck for supporting said rod (15),
a wheel support (13, 14) carried by said rod (15) for supporting said wheel (4), and
either the rod support (16, 17) or the wheel support (14) is stationary fixed to the rod (15), whereas the other support (14; 16, 17) is slidingly connected to the rod (15),
**characterised in that**
the support (14; 16, 17) which is slidingly connected to the rod (15) comprises a sliding bearing (19), which bearing (19) comprises an outer housing (33) and a sliding bearing bushing (25) which is arranged around the rod (15), wherein a flexible bushing element (36) is arranged radially between the outer housing (33) and the sliding bearing bushing (25),
wherein, by means of deformation of said flexible bushing element (36) the slidingly connected support (14; 16, 17) can slide along the rod (15) without substantial additional resistance even if said support (14; 16, 17) is axially misaligned with respect to the rod (15),
wherein a rigid sleeve (32) is arranged radially between the sliding bearing bushing (25) and the flexible bushing element (36).

2. Suspension unit (12) according to claim 1, wherein the sliding bearing bushing (25), the sleeve (32) and the flexible bushing element (36) are arranged in the bearing housing (33), and wherein said housing (33) further comprises two retaining elements (28, 29) which restrict axial movement of the sleeve (32) and the sliding bearing bushing (25).

3. Suspension unit (12) according to any of claims 1-2, wherein sealings (26, 27) are provided around the suspension rod (15).

4. Suspension unit (12) according to claim 2 and 3, wherein the retaining elements (28, 29) comprise means for holding the sealings (26, 27).

5. Suspension unit (12) according to any of the preceding claims, wherein the flexible bushing element (36) is essentially cylindrical and is arranged around the suspension rod (15).

6. Suspension unit (12) according to any of the preceding claims, wherein the support (14) which is stationary fixed to the rod (15) is press fit to the rod (15).

7. Suspension unit (12) according to any of the preceding claims, wherein adjacent and substantially parallel to said rod (15), at least one additional rod (15) is arranged.

8. Industrial truck, **characterised in that** said truck comprises a suspension unit (12) in accordance with any of the preceding claims.

9. Sliding bearing (19) for an industrial truck, which bearing (19) comprises an outer housing (33) and a sliding bearing bushing (25), which bearing (19) can be arranged around a rod (15) **characterised in that** a flexible bushing element (36) is arranged radially between the outer housing (33) and the sliding bearing bushing (25), wherein, by means of deformation of said flexible bushing element (36), the sliding bearing (19) can slide along the rod (15) without substantial additional resistance even if said sliding bearing (19) is axially misaligned with respect to the rod (15), wherein a rigid sleeve (32) is arranged radially between the sliding bearing bushing (25) and the flexible bushing element (36).

## Patentansprüche

1. Verschiebbare Aufhängungseinheit (12) für ein Rad (4) eines Flurförderfahrzeugs, wobei die Einheit aufweist:
eine im Wesentlichen vertikale Stange (15),
eine Stangenhalterung (16, 17), die an dem Flurförderfahrzeug angeordnet ist, um die Stange (15) zu halten,
eine Radhalterung (13, 14), die durch die Stange (15) getragen wird, um das Rad (4) zu halten, und wobei
entweder die Stangenhalterung (16, 17) oder die Radhalterung (14) ortsfest an der Stange (15) befestigt ist, wohingegen die andere Halterung (14; 16, 17) verschiebbar mit der Stange (15) verbunden ist,
**dadurch gekennzeichnet dass**,
die Halterung (14; 16, 17), die verschiebbar mit der Stange (15) verbunden ist, ein Gleitlager (19) aufweist, wobei das Gleitlager (19) ein äußeres Gehäuse (33) und eine Gleitlagerbuchse (25) aufweist, die um die Stange (15) herum angeordnet ist, wobei ein flexibles Buchsenelement (36) radial zwischen dem äußeren Gehäuse (33) und der Gleitlagerbuchse (25) angeordnet ist,
wobei die verschiebbar verbundene Halterung (14; 16, 17) durch Verformung des flexiblen Buchsenelements (36) ohne wesentlichen, zusätzlichen Wiederstand entlang der Stange (15) gleiten kann, sogar dann, wenn die Halterung (14; 16, 17) bezüglich der Stange (15) axial falsch ausgerichtet ist, wobei eine starre Hülse (32) radial zwischen der Gleitlagerbuchse (25) und dem flexiblen Buchsenelement (36) angeordnet ist.

2. Aufhängungseinheit (12) gemäß Anspruch 1, bei der die Gleitlagerbuchse (25), die Hülse (32) und das flexible Buchsenelement (36) in dem Lagergehäuse (33) angeordnet sind, und wobei das Gehäuse (33) ferner zwei Sicherungselemente (28, 29) aufweist, welche die axiale Bewegung der Hülse (32) und der Gleitlagerbuchse (25) begrenzen.

3. Aufhängungseinheit (12) gemäß einem der Ansprüche 1-2, bei der Dichtungen (26, 27) um die Aufhängungsstange (15) herum vorgesehen sind.

4. Aufhängungseinheit (12) gemäß Anspruch 2 und 3, bei der die Sicherungselemente (28, 29) Einrichtungen zum Halten der Dichtungen (26, 27) aufweisen.

5. Aufhängungseinheit (12) gemäß einem der vorangegangenen Ansprüche, bei der das flexible Buchsenelement (36) im Wesentlichen zylindrisch ist und um die Aufhängungsstange (15) herum angeordnet ist.

6. Aufhängungseinheit (12) gemäß einem der vorangegangenen Ansprüche, bei der die Halterung (14), die ortsfest an der Stange (15) befestigt ist, in die Stange (15) eingepresst ist.

7. Aufhängungseinheit (12) gemäß einem der vorangegangenen Ansprüche, bei der angrenzend und im Wesentlichen parallel zu der Stange (15) zumindest eine zusätzliche Stange (15) angeordnet ist.

8. Flurförderfahrzeug, **gekennzeichnet dadurch dass** das Flurförderfahrzeug eine Aufhängungseinheit (12) in Übereinstimmung mit einem der vorangegangenen Ansprüche, aufweist.

9. Gleitlager (19) für ein Flurförderfahrzeug, wobei das Lager (19) ein äußeres Gehäuse (33) und eine Gleitlagerbuchse (25) aufweist, wobei das Lager (19) um eine Stange (15) herum angeordnet werden kann, **dadurch gekennzeichnet dass** ein flexibles Buchsenelement (36) radial zwischen dem äußeren Gehäuse (33) und der Gleitlagerbuchse (25) angeordnet ist, wobei das Gleitlager (19) durch Verformung des flexiblen Buchsenelements (36) ohne wesentlichen, zusätzlichen Wiederstand entlang der Stange (15) gleiten kann, sogar dann, wenn das Gleitlager (19) bezüglich der Rundstange (15) axial falsch ausgerichtet ist, wobei eine starre Hülse (32) radial zwischen der Gleitlagerbuchse (25) und dem flexiblen Buchsenelement (36) angeordnet ist.

## Revendications

1. Unité de suspension coulissante (12) destinée à une roue (4) d'un chariot de manutention, laquelle unité (12) comprend :
une tige (15) sensiblement verticale ;
un support de tige (16, 17) agencé au niveau du chariot pour supporter ladite tige (15) ;
un support de roue (13, 14) porté par ladite tige (15) pour supporter ladite roue (4) ; et
soit le support de tige (16, 17) soit le support de roue (14) est fixé à demeure contre ladite tige (15), tandis que l'autre support (14 ; 16, 17) est relié de manière coulissante à la tige (15) ;
**caractérisé en ce que** :
le support (14 ; 16, 17) qui est relié de manière coulissante à la tige (15), comprend un palier lisse (19), lequel palier (19) comprend un logement extérieur (33) et une bague de palier lisse (25) qui est agencée autour de la tige (15), dans laquelle un élément de bague flexible (36) est agencé radialement entre le logement extérieur (33) et la bague de palier lisse (25) ;
dans laquelle, au moyen d'une déformation dudit élément de bague flexible (36), le support relié de manière coulissante (14 ; 16, 17) peut coulisser le long de la tige (15) sans résistance supplémentaire sensible même si ledit support (14 ; 16, 17) présente un défaut d'alignement axial par rapport à la tige (15) ;
dans laquelle un manchon rigide (32) est agencé radialement entre la bague de palier lisse (25) et l'élément de bague flexible (36).

2. Unité de suspension (12) selon la revendication 1, dans laquelle la bague de palier lisse (25), le manchon (32) et l'élément de bague flexible (36) sont agencés dans le logement de palier (33), et dans laquelle ledit logement (33) comprend en outre deux éléments de retenue (28, 29) qui limitent un mouvement axial du manchon (32) et de la bague de palier lisse (25).

3. Unité de suspension (12) selon l'une quelconque des revendications 1 et 2, dans laquelle des dispositifs d'étanchéité (26, 27) sont prévus autour de la tige de suspension (15).

4. Unité de suspension (12) selon les revendications 2 et 3, dans laquelle les éléments de retenue (28, 29) comprennent des moyens pour tenir les dispositifs d'étanchéité (26, 27).

5. Unité de suspension (12) selon l'une quelconque des revendications précédentes, dans laquelle l'élément de bague flexible (36) est sensiblement cylindrique et est agencé autour de la tige de suspension (15).

6. Unité de suspension (12) selon l'une quelconque des revendications précédentes, dans laquelle le support (14) qui est fixé à demeure contre la tige (15), est ajusté par pression contre la tige (15).

7. Unité de suspension (12) selon l'une quelconque des revendications précédentes, dans laquelle, adjacente et sensiblement parallèle à ladite tige (15), est agencée au moins une tige (15) supplémentaire.

8. Chariot de manutention, **caractérisé en ce que** ledit chariot comprend une unité de suspension (12) selon l'une quelconque des revendications précédentes.

9. Palier lisse (19) destiné à un chariot de manutention, lequel palier (19) comprend un logement extérieur (33) et une bague de palier lisse (25), lequel palier (19) peut être agencé autour d'une tige (15), **caractérisé en ce qu'**un élément de bague flexible (36) est agencé radialement entre le logement extérieur (33) et la bague de palier lisse (25), dans lequel, au moyen d'une déformation dudit élément de bague flexible (36), le palier lisse (19) peut coulisser le long de la tige (15) sans résistance supplémentaire sensible même si ledit palier lisse (19) présente un défaut d'alignement axial par rapport à la tige (15), dans lequel un manchon rigide (32) est agencé radialement entre la bague de palier lisse (25) et l'élément de bague flexible (36).
